# EUROPEAN PATENT APPLICATION

(11) **EP 4 250 780 A1**
(43) Date of publication of application: **27.09.2023**
(21) Application number: 22749194.1
(22) Date of filing: 30.01.2022
(51) Int. Cl.: H04W 4/50

(54) **COMPUTING POWER SERVICE METHOD AND DEVICE**

(30) Priority: 05.02.2021 CN 202110159539
(71) Applicant: Vivo Mobile Communication Co., Ltd., Dongguan, Guangdong 523863 (CN)
(72) Inventor: HAN, Lufeng, Dongguan, Guangdong 523863 (CN); KANG, Yanchao, Dongguan, Guangdong 523863 (CN); ZHANG, Pengfei, Dongguan, Guangdong 523863 (CN); YANG, Xiaodong, Dongguan, Guangdong 523863 (CN); BAO, Wei, Dongguan, Guangdong 523863 (CN); WANG, Wen, Dongguan, Guangdong 523863 (CN)
(74) Representative: Murgitroyd & Company
(86) International application number: PCT/CN2022/075142
(87) International publication number: WO 2022/166915

(57) **Abstract**

Embodiments of this application disclose a computing power service method and a device, which can solve the problem that a terminal requests a computing power service from a network side device, thus occupying a lot of computing resources and communications resources of the network side device. The method can be applied to a first terminal and includes: receiving first indication information from a second terminal, where the first indication information is used to indicate that the second terminal expects the first terminal to perform computing processing on target data; performing computing processing on the target data to obtain a processing result; and sending the processing result to the second terminal.

## Description

### CROSS-REFERENCE OF RELATED APPLICATION

The present invention claims priority to Chinese Patent Application No. 202110159539.1, filed with the China National Intellectual Property Administration on February 5, 2021 and entitled "COMPUTING POWER SERVICE METHOD AND DEVICE", which is incorporated herein by reference in its entirety.

### TECHNICAL FIELD

This application pertains to the field of communications technologies, and in particular, to a computing power service method and a device, where the device may include a terminal, a network side device, and the like.

### BACKGROUND

In the related art, the terminal can obtain a computing power service from a network side device. As for the computing power service, for example, the network side device receives an image to be recognized sent by the terminal, performs image recognition in an image database based on image characteristics of the image to be recognized, obtains a target image matching the image to be recognized, and notifies the terminal.

However, with more terminals requesting the computing power service, more and more computing resources of the network side device are occupied, and more communications resources of the network side device may be occupied.

### SUMMARY

Embodiments of this application provide a computing power service method and a device, which can solve the problem that a terminal requests a computing power service from a network side device, thus occupying a lot of computing resources and communications resources of the network side device.

According to a first aspect, a computing power service method is provided and applied to a first terminal, where the method includes: receiving first indication information from a second terminal, where the first indication information is used to indicate that the second terminal expects the first terminal to perform computing processing on target data; performing computing processing on the target data to obtain a processing result; and sending the processing result to the second terminal.

According to a second aspect, a computing power service method is provided and applied to a second terminal, where the method includes: sending first indication information, where the first indication information is used to indicate that the second terminal expects the first terminal to perform computing processing on target data; and receiving a processing result from the first terminal, where the processing result is obtained by performing computing processing on the target data by the first terminal.

According to a third aspect, a computing power service method is provided and applied to a network side device, where the method includes: sending second indication information, where the second indication information is used to indicate, for a second terminal, a first terminal that provides a computing power service, where the first terminal is used to: perform computing processing on target data to obtain a processing result, and send the processing result to the second terminal.

According to a fourth aspect, a first terminal is provided and includes: a receiving module, configured to receive first indication information from a second terminal, where the first indication information is used to indicate that the second terminal expects the first terminal to perform computing processing on target data; a computing processing module, configured to perform computing processing on the target data to obtain a processing result; and a sending module, configured to send the processing result to the second terminal.

According to a fifth aspect, a second terminal is provided and includes: a sending module, configured to send first indication information, where the first indication information is used to indicate that the second terminal expects the first terminal to perform computing processing on target data; and a receiving module, configured to receive a processing result from the first terminal, where the processing result is obtained by performing computing processing on the target data by the first terminal.

According to a sixth aspect, a network side device is provided and includes: a sending module, configured to send second indication information, where the second indication information is used to indicate, for a second terminal, a first terminal that provides a computing power service, where the first terminal is used to: perform computing processing on target data to obtain a processing result, and send the processing result to the second terminal.

According to a seventh aspect, a terminal is provided. The terminal includes a processor, a memory, and a program or an instruction stored in the memory and executable on the processor, where the program or the instruction is executed by the processor to implement the method according to the first aspect or the second aspect.

According to an eighth aspect, a network side device is provided. The network side device includes a processor, a memory, and a program or an instruction stored in the memory and executable on the processor, and when the program or the instruction is executed by the processor, the method according to the third aspect is implemented.

According to a ninth aspect, a readable storage medium is provided. The readable storage medium stores a program or an instruction, and when the program or the instruction is executed by a processor, the method according to the first aspect, the second aspect, or the third aspect is implemented.

According to a tenth aspect, a computer program product is provided. The computer program product includes a processor, a memory, and a program or an instruction stored in the memory and executable on the processor, and when the program or the instruction is executed by the processor, the method according to the first aspect, the second aspect, or the third aspect is implemented.

According to an eleventh aspect, a chip is provided. The chip includes a processor and a communications interface, the communications interface is coupled to the processor, and the processor is configured to run a program or an instruction, to implement the method according to the first aspect, the second aspect, or the third aspect.

In the embodiments of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

### BRIEF DESCRIPTION OF DRAWINGS

FIG. 1 is a schematic diagram of a wireless communications system according to an embodiment of this application;
FIG. 2 is a schematic flowchart of a computing power service method according to an embodiment of this application;
FIG. 3 is a schematic flowchart of a computing power service method according to an embodiment of this application;
FIG. 4 is a schematic flowchart of a computing power service method according to an embodiment of this application;
FIG. 5 is a schematic flowchart of a computing power service method according to an embodiment of this application;
FIG. 6 is a schematic flowchart of a computing power service method according to an embodiment of this application;
FIG. 7 is a schematic flowchart of a computing power service method according to an embodiment of this application;
FIG. 8 is a schematic flowchart of a computing power service method according to an embodiment of this application;
FIG. 9 is a schematic flowchart of a computing power service method according to an embodiment of this application;
FIG. 10 is a schematic flowchart of a computing power service method according to an embodiment of this application;
FIG. 11 is a schematic diagram of a structure of a first terminal according to an embodiment of this application;
FIG. 12 is a schematic diagram of a structure of a second terminal according to an embodiment of this application;
FIG. 13 is a schematic diagram of a structure of a network side device according to an embodiment of this application;
FIG. 14 is a schematic diagram of a structure of a communications device according to an embodiment of this application;
FIG. 15 is a schematic diagram of a structure of a terminal according to an embodiment of this application; and
FIG. 16 is a schematic diagram of a structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects, and do not need to be used to describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that the technology described in the embodiments of this application is not limited to a Long Term Evolution (Long Term Evolution, LTE)/LTE-Advanced (LTE-Advanced, LTE-A) system, and may also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, in the following descriptions, a new radio (New Radio, NR) system is described for an illustration purpose, and NR terms are used in most of the following descriptions, although these technologies may also be applied to applications other than the NR system application, such as a 6^{th} generation (6^{th} Generation, 6G) communications system.

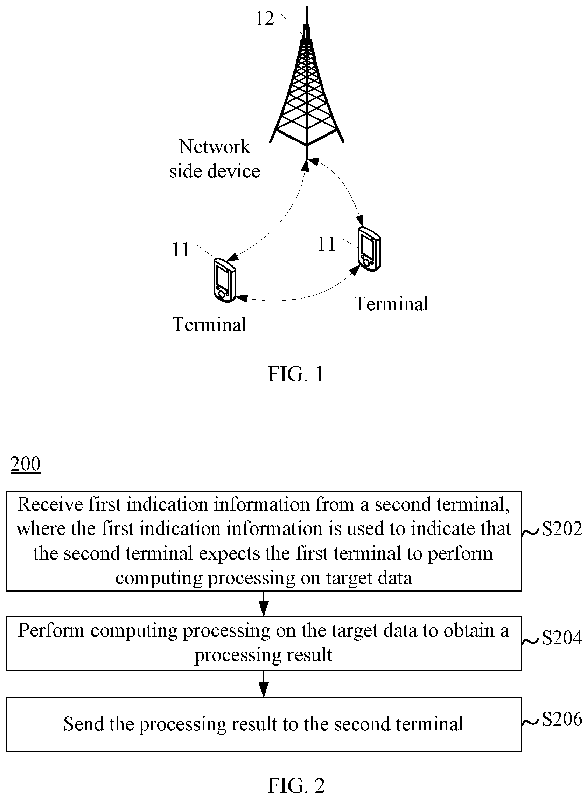

FIG. 1 is a schematic diagram of a wireless communications system to which an embodiment of this application can be applied. The wireless communications system includes a terminal 11 and a network side device 12. The terminal 11 may be referred to as a terminal device or user equipment (User Equipment, UE). The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (VUE), and pedestrian user equipment (PUE). The wearable device includes a bracelet, a headset, and glasses. It should be noted that a specific type of the terminal 11 is not limited in this embodiment of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a next generation NodeB (gNB), a home NodeB, a home evolved NodeB, a WLAN access point, a Wi-Fi node, a transmitting receiving point (Transmitting Receiving Point, TRP), or another appropriate term in the art. As long as the same technical effect is achieved, the base station is not limited to a specific technical term. It should be noted that the base station in the NR system is taken only as an example in the embodiments of this application, but a specific type of the base station is not limited.

With reference to the accompanying drawings, a computing power service method and a device provided in the embodiments of this application is described in detail by using specific embodiments and application scenarios.

In the related art, some terminals (provider terminals) have strong computing power which are not fully utilized, while some terminals (consumer terminals) have weak computing power with strong computing requirements. If all the consumer terminals obtain the computing power service from the network side device, more computing resources and communications resources of the network side device may be occupied, and may fail to obtain the computing power service from the network side device when the network environment is not good.

To solve the above technical problems, in the embodiments of this application, the first terminal (the provider terminal) replaces the network side device to provide the computing power service for the second terminal (the consumer terminal). Because a quantity of the first terminals is far greater than that of the network side device, it is equivalent to changing from providing the computing power service by the network side device in a centralized manner to providing the computing power service by the first terminal in a distributed manner. This avoids occupying more computing resources of the network side device; avoids occupying more communications resources of the network side device, thus avoiding the influence on other terminals in a same cell; avoids a failure of the computing power service when a network environment is not good; and the computing power resource of the first terminal is fully utilized to avoid resource waste.

As shown in FIG. 2, an embodiment of this application provides a computing power service method 200, and the method can be performed by a first terminal. In other words, the method can be performed by software or hardware installed in the first terminal, and the method includes the following steps.

S202: Receive first indication information from a second terminal, where the first indication information is used to indicate that the second terminal expects the first terminal to perform computing processing on target data.

Before this embodiment, a communications connection between the first terminal and the second terminal can be established through terminal direct connection technology, such as Bluetooth, Wi-Fi (Wi-Fi), sidelink (sidelink), and other communications technologies.

In an example, the target data may be face image data, and accordingly, the computing processing may be face image recognition. It can be understood that the target data can also be any other types of data that needs to be processed through computing. This is not limited in the embodiments of this application.

In this embodiment, the first terminal may receive other information, such as information related to the target data, while receiving the first indication information. For example, the first terminal further receives the target data from the second terminal; or further receives a storage location of the target data, so that the first terminal can obtain the target data based on the storage location.

In an example, the first indication information can also be directly the target data. In this example, the first terminal and the second terminal can pre-agree a computing processing manner, so that the second terminal directly sends the target data to the first terminal, and the first terminal can learn that it is the second terminal that expects to perform computing processing on the target data.

S204: Perform computing processing on the target data to obtain a processing result.

S206: Send the processing result to the second terminal.

In an example, the target data may be face image data, and accordingly, the computing processing may be face image recognition. The processing result obtained by the first terminal may be one or more target face images matching the face image. In this way, the first terminal can send the image information or storage location of the target face image to the second terminal.

According to the computing power service method in this embodiment of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

Optionally, before the receiving first indication information from a second terminal in S202, the method further includes: sending a first message, where the first message is used to indicate computing power information that the first terminal can provide. In this example, the first terminal (the provider terminal) can broadcast the computing power information that the first terminal can provide, and after the second terminal (the consumer terminal) finds the first terminal, the first terminal and the second terminal can be directly connected for the computing power service.

Optionally, before the receiving first indication information from a second terminal in S202, the method further includes: receiving a second message from the second terminal, where the second message is used to indicate computing power information required by the second terminal. In this example, the second terminal (the consumer terminal) can request the computing power information that the second terminal requires, and after the first terminal (the provider terminal) finds the second terminal, the first terminal and the second terminal can be directly connected for the computing power service.

Optionally, in the foregoing embodiments, the first terminal is selected and obtained by the second terminal based on at least one of the following 1) to 3).
1) Computing power information required by the second terminal.
2) A priority sorting result of a plurality of terminals providing the computing power service, where the plurality of terminals providing the computing power service include the first terminal. In this example, the second terminal can obtain the computing power information of the plurality of terminals providing the computing power service, prioritize the plurality of terminals providing the computing power service, and select the first terminal based on the priority sorting result.
3) A radio resource provided by the first terminal, where the radio resource is used to establish a communications connection between the first terminal and the second terminal. In this example, considering that the second terminal may not support the radio resources provided by some provider terminals, or channel quality of the radio resources provided by some provider terminals may be poor, the first terminal is selected based on the radio resources provided by the provider terminals.

Optionally, the priority sorting result of the plurality of terminals providing the computing power service is obtained based on at least one of the following 1) to 3).
1) Whether the plurality of terminals providing the computing power service have successfully provided the computing power service for the second terminal recently. In this example, a priority of a terminal that successfully provides the computing power service for the second terminal is higher than that of a terminal that does not provide the computing power service.
2) A capability sequence of computing power resources of the plurality of terminals providing the computing power service. In this example, the stronger the computing power resource of the terminal providing the computing power service is, the higher the capability sequence of the terminal ranks, that is, the higher the priority of the terminal is.
3) A matching result between computing power resources that the plurality of terminals providing the computing power service can provide and computing power resources required by the second terminal. The matching result can be a matching degree value, and the greater the matching degree value is, the higher the priority of the corresponding terminal is.

Optionally, in the foregoing embodiments, before the receiving first indication information from a second terminal in S202, the method further includes: receiving a computing power request message from the second terminal, where the computing power request message is sent by the second terminal and is used to request the first terminal to provide the computing power service; and sending a computing power response message to the second terminal, where the computing power response message may be a confirmation message, agreeing to provide the computing power service for the second terminal.

Optionally, in the foregoing embodiments, before the receiving first indication information from a second terminal in S202, the method further includes: receiving an access request message from the second terminal, where the access request message is sent by the second terminal based on a radio resource provided by the first terminal; and sending an access response message to the second terminal, where the access response message may be a confirmation message, agreeing to access of the second terminal and provide the computing power service for the second terminal.

Optionally, in the foregoing embodiments, the method further includes: receiving a third message, where the third message is used to instruct the second terminal to select a computing power service provided by the first terminal, and before receiving the third message, if the first terminal sends a first message, the first terminal is further configured to stop sending the first message, and the first message is used to indicate computing power information that the first terminal can provide.

In this embodiment, considering that the first terminal may not have enough computing power resources to provide the computing power service for other terminals after providing the computing power service for the second terminal, the first terminal stops sending the first message and temporarily stops providing the computing power service for other terminals.

Optionally, in other embodiments, the first terminal (the provider terminal) and the second terminal (the consumer terminal) can obtain computing power information of each other through the network side device. In this way, the first terminal and the second terminal can be directly connected on a computing power resource (such as a radio spectrum resource) recommended by the network side device for data transmission and computing power service. In this example, the network side device can match the computing power information and select a provider terminal matching the computing power information for the consumer terminal.

In this embodiment, the first terminal is selected by the network side device based on at least one of the following 1) to 6).
1) Computing power information required by the second terminal.
2) A priority sorting result of a plurality of terminals providing the computing power service, where the plurality of terminals providing the computing power service include the first terminal.
3) A radio resource provided by the first terminal, where the radio resource is used to establish a communications connection between the first terminal and the second terminal.
4) Location information of the first terminal and location information of the second terminal.
5) A terminal for providing the computing power service that the second terminal expects to use.
6) A terminal for providing the computing power service that the second terminal does not expect to use.

Optionally, in the foregoing embodiments, the method further includes: storing at least one of the following 1) to 3) of the second terminal: 1) identity information; 2) security information; and 3) computing power information.

Optionally, in the foregoing embodiments, the computing power information may include a computing power resource, and the computing power resource includes at least one of the following 1) to 11): 1) floating point operations per second; 2) a quantity of cores of a processor; 3) a multiply accumulate capability; 4) a quantity of cores of a graphics processing unit; 5) a dominant frequency of a processor/a graphics processing unit; 6) a frequency multiplication of a processor/a graphics processing unit; 7) an integer unit of a processor/a graphics processing unit; 8) a floating point unit of a processor/a graphics processing unit; 9) an output speed for computing a hash function; 10) a supported algorithm type; a type of processed data; and 11) a security algorithm, radio resource information for communication, and the like.

Optionally, in the foregoing embodiments, the first indication information, the first message, the second message, or the third message may include one of the following 1) to 2): 1) a non-access stratum message; and 2) an access stratum message.

The non-access stratum message may include at least one of the following 1) to 9): 1) a registration message; 2) a configuration update message; 3) a non-access stratum direct transfer message; 4) a message in a service request process; 5) a de-register message; 6) a session management message; 7) a session establishment message; 8) a session modification message; and 9) a session release message.

The access stratum message may include at least one of the following 1) to 6): 1) a broadcast message; 2) a system message; 3) a radio link establishment message; 4) a radio resource configuration message; 5) a radio resource reconfiguration message; and 6) a radio link release message.

In order to describe in detail the computing power service method provided in this embodiment of this application, the following will use several specific embodiments for description.

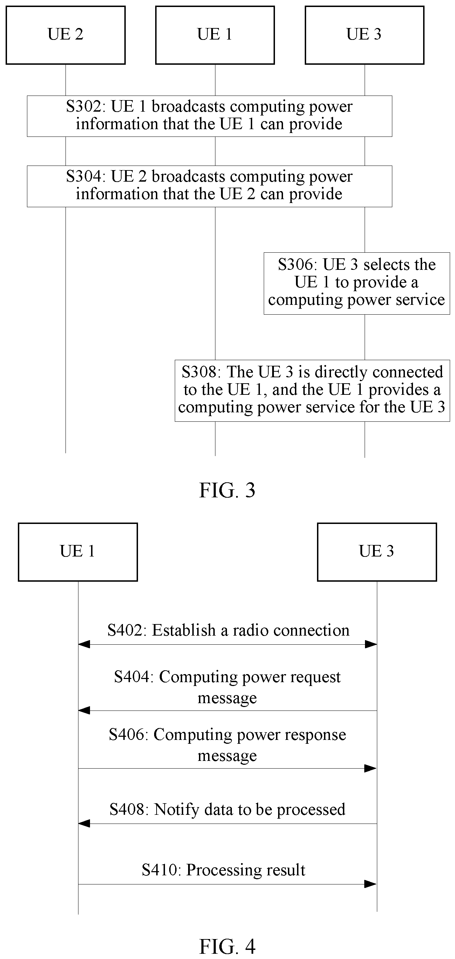

Refer to the embodiment shown in FIG. 3. In this embodiment, the first terminal broadcasts the computing power information that the first terminal can provide. As shown in FIG. 3, this embodiment includes the following steps.

S302: UE 1 (corresponding to the first terminal in the previous embodiment) broadcasts computing power information that the UE 1 can provide.

Optionally, the broadcast information can be constantly changed as the computing power information provided by the UE 1.

Optionally, the computing power information may include a computing power resource, and the computing power resource may include at least one of the following: 1) to 13):
1) floating point operations per second (flops);
2) a quantity of cores of a processor;
3) multiply accumulate (Multiply Accumulate, MAC);
4) a quantity of cores of a graphics processing unit;
5) a dominant frequency of a processor/a graphics processing unit;
6) a frequency multiplication of a processor/a graphics processing unit;
7) an integer unit of a processor/a graphics processing unit;
8) a floating point unit of a processor/a graphics processing unit;
9) an output speed for computing a hash function;
10) a supported algorithm type, such as a decision tree, a random forest algorithm, logistic regression, a neural network, or the like;
11) a type of processed data, such as image data, audio data, video data, game data, or the like;
12) a security algorithm, such as an encryption and decryption algorithm and an integrity protection algorithm; and
13) radio resource information for communication.

S304: LTE 2 broadcasts computing power information that the LTE 2 can provide. For the description of the computing power information, please refer to the introduction of S302.

S306: UE 3 selects a provider terminal based on computing power information the UE 3 requires and a priority sorting result of provider terminals. For example, the UE 1 is selected based on a type of data required to be processed and based on a computing speed sequence that can be provided.

S308: The LTE 3 is directly connected to the LTE 1 (refer to the embodiment shown in FIG. 4 for a connection process), and the UE 1 provides a computing power service for the UE 3.

Refer to the embodiment shown in FIG. 4, this embodiment includes the following steps.

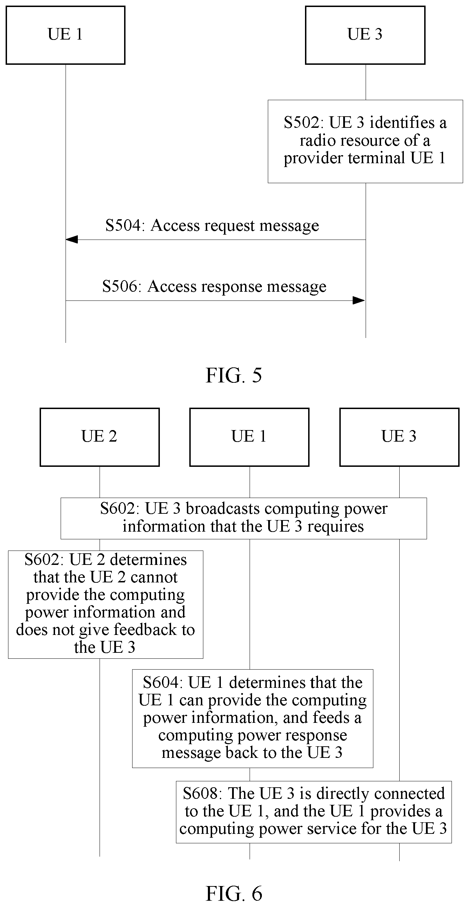

S402: A radio connection is established between the UE 1 (the provider terminal) and the UE 3 (the consumer terminal) to transmit high-level computing power related information, and the computing power related information includes, for example, a computing power request related message mentioned in the following steps. For the method for establishing the radio connection between the UE 1 and the UE 3, refer to the embodiment shown in FIG. 5.

S404: The UE 3 sends a computing power request message to the UE 1, and the computing power request message may include an identity of the UE 3 (UE 3 ID) and computing power request information, where he computing power request information may include the computing power resource mentioned in Embodiment 1.

S406: The LTE 1 sends a computing power response message to the LTE 3 based on the computing power request message of the UE 3 and the resource that the UE 1 can provide. An identity of the UE 1 (UE 1 ID) can be carried, and a computing power request result is: accept or reject. If the computing power request result is: reject, a reason for rejection such as insufficient resources can be carried. If the request is accepted, enter the following steps.

S408: The UE 3 sends a message to the UE 1 to notify the UE 1 what data the UE 3 expects the UE 1 to process. This step is corresponding to S202 in the previous embodiment.

In this message, target data to be processed can be transmitted, as well as location information of the target data to be processed, such as a uniform resource locator (Uniform Resource Locator, URL).

S410: After processing the target data, the UE 1 sends a processing result to the UE 3. This step is corresponding to S206 in the previous embodiment.

Refer to the embodiment shown in FIG. 5, this embodiment includes the following steps.

S502: The UE 3 identifies the radio resource of the provider terminal UE 1, such as frequency points and modulation methods.

S504: The LTE 3 uses the radio resource indicated by the LTE 1 through broadcasting to send an access request message to the UE 1, where the message carries the identity of the UE 3 and the reason for access, such as a computing power request.

S506: The UE 1 responds to the access request message, that is, sends an access response message (or referred to as an access response message): if the access request of the UE 3 is agreed, the UE 3 is informed that the connection is successfully established; and otherwise, the UE 3 is informed that the connection fails to be established.

Optionally, S504 of this embodiment can be combined with S404 of the above embodiment; and S506 of this embodiment can be combined with S406 of the above embodiment.

Refer to the embodiment shown in FIG. 6, in this embodiment, the consumer terminal requests the computing power information that the consumer terminal requires. As shown in FIG. 6, this embodiment includes the following steps.

S602: The UE 3 (the consumer terminal) broadcasts computing power information that the UE 3 requires.

For the computing power information, refer to the description in the previous embodiment.

S604: After receiving the computing power information of the UE 3, the UE 2 (the provider terminal) determines that the LTE 2 cannot provide the computing power information and does not give feedback to the UE 3.

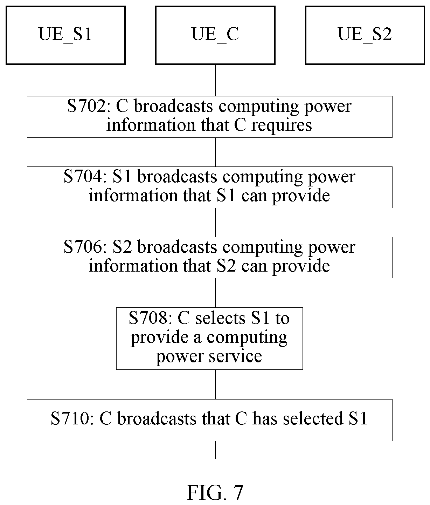

S606: After receiving the computing power information of the UE 3, the UE 1 (the provider terminal) determines that the LTE 1 can provide the computing power information for the LTE 3, and feeds a computing power response message back to the LTE 3. For details, refer to the description in the embodiment shown in FIG. 7.

S608: The UE 3 is directly connected to the UE 1, and the UE 1 provides a computing power service for the UE 3.

Refer to the embodiment shown in FIG. 7, this embodiment includes the following steps.

S702: A consumer terminal C broadcasts computing power information that the consumer terminal C requires.

S704: A provider terminal S1 broadcasts computing power information, a terminal identifier, a supported radio resource, and the like that the provider terminal S1 can provide.

S706: A provider terminal S2 broadcasts computing power information, a terminal identifier, a supported radio resource, and the like that the provider terminal S2 can provide.

S708: After receiving the computing power information broadcast by S1 and S2, the consumer terminal C refers to radio resources of S1 and S2, selects a proper radio resource, and selects a provider terminal with a highest sorting priority of computing power information, which is assumed to be S 1.

S710: The consumer terminal C broadcasts that S1 is selected.

After receiving the message, the provider terminal S1 stops the broadcast in step S704 and prepares an access request of the consumer terminal C; and for a subsequent process, refer to the description in the previous embodiment.

After receiving the message, the provider terminal S2 may continue the broadcast in step S706.

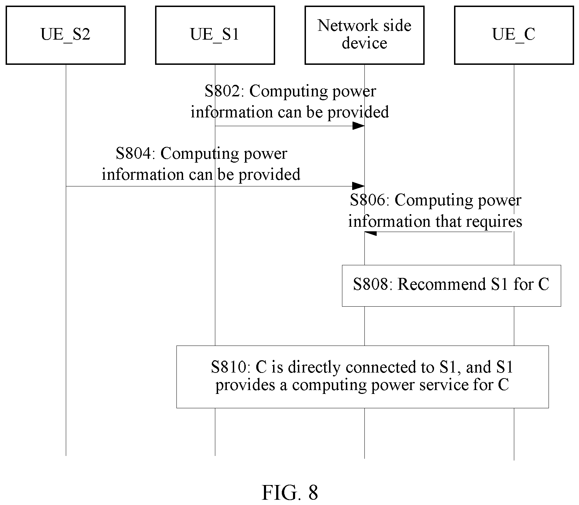

Refer to the embodiment shown in FIG. 8, in this embodiment, the consumer terminal and the provider terminal can obtain computing power information of other terminals through the network side device, and then the terminal provides or accepts the computing power service in a direct interaction manner without being forwarded by the network side device.

As shown in FIG. 8, this embodiment includes the following steps.

S802: The provider terminal S1 notifies the network side device of computing power information, a terminal identifier, a supported radio resource, and the like that the provider terminal S1 can provide.

S804: The provider terminal S2 notifies the network side device of computing power information, a terminal identifier, a supported radio resource, and the like that the provider terminal S2 can provide.

S806: The consumer terminal C notifies the network side device of the computing power information that the consumer terminal C requires, location information of the consumer terminal C, and provider terminal information that the consumer terminal C prefers to use and/or prefers not to use, such as a terminal identifier.

S808: The network side device recommends the provider terminal S1 to the consumer terminal C based on the computing power information and the location information of the provider terminal, a computing power requirement and location information of the consumer terminal C, and provider terminal information that the consumer terminal C prefers to use and/or prefers not to use.

In an example, a sorting method adopted by the network side device is as follows: a provider terminal that the consumer terminal tends to use or used has a higher priority; a provider terminal close to the consumer terminal has a higher priority; and a provider terminal that better meets the computing power requirement has a higher priority.

S810: The consumer terminal C and the provider terminal S1 are directly connected by using the radio resource, that is, the computing power service is executed by using the method 200 of the embodiment.

In other embodiments, if the computing power service in S810 fails to be provided, the consumer terminal C can also feed a result back to the network side device, update the provider terminal that the consumer terminal C prefers not to use, and then go to S806 to re-notify the network side device of the computing power information that the consumer terminal C requires.

Optionally, in the previous embodiments, the terminal may also locally store relevant information of the terminal executing the computing power service, which will be combined with the previous method embodiments to form another embodiment.

In this embodiment, after the two terminals (the provider terminal and the consumer terminal) successfully acquire/provide the computing power service, the two terminals can locally save relevant information of the executed computing power service, such as identity information, security information, and computing power information of the other party (the provider terminal or the consumer terminal) for use in a next computing power service.

The above information can be stored in a universal subscriber identity module (Universal Subscriber Identity Module, USIM) or a memory card of the terminal. A storage format is shown in Table 1 below, and the computing power information in Table 1 can be described with reference to the previous embodiments.

**TABLE 1 RELATED INFORMATION TABLE OF A COMPUTING POWER SERVICE**

| | |
|---|---|
| Peer terminal ID 1 | ... |
| Service time | ... |
| Computing power information of a peer terminal | ... |
| Peer terminal ID 2 | ... |
| Service time | ... |
| Computing power information of a peer terminal | ... |

This embodiment of this application will mainly describe that the consumer terminal prioritizes provider terminals providing the computing power service. In this embodiment, when the consumer terminal needs to select a provider terminal that can provide the computing power service, the consumer terminal can sort the provider terminals that can provide the computing power service, and then select the provider terminal in a priority order.

For example, a priority sorting method may include at least one of the following 1) to 3).
1) A highest priority belongs to the provider terminal that has successfully provided the computing power service recently, and a lower priority belongs to a provider terminal that has not provided the computing power service.
2) A highest priority belongs to the provider terminal with a strongest computing power resource, and a lower priority belongs to the provider terminal with a weaker computing power resource.
3) A highest priority belongs to the provider terminal with a same computing type required this time, and a lower priority belongs to the provider terminal with a different computing type required this time. The computing type includes, for example, an image data type, a game data type, a video data type, and the like.

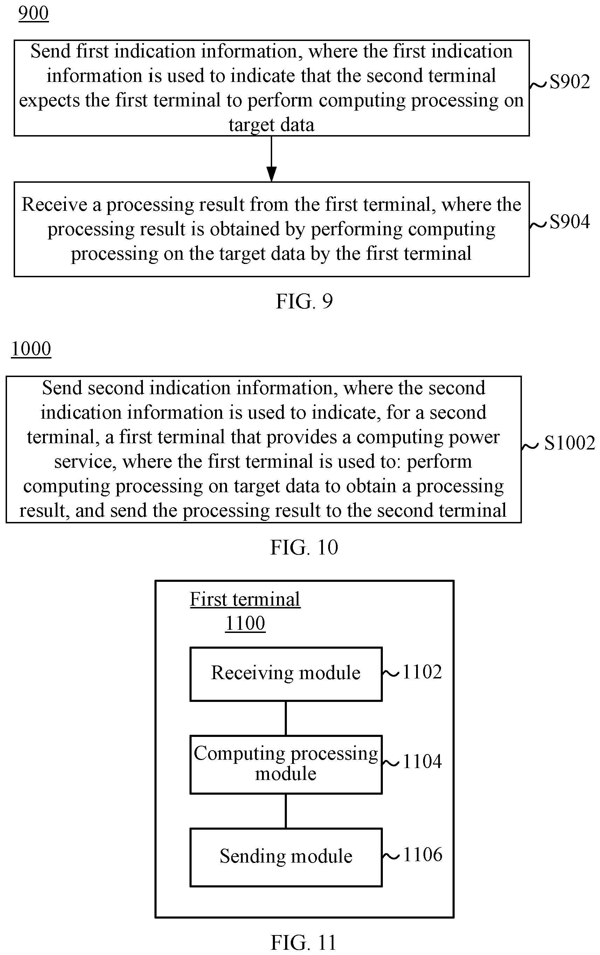

The computing power service method according to the embodiments of this application is described in detail above with reference to FIG. 2 to FIG. 8. A computing power service method according to another embodiment of this application will be described in detail below with reference to FIG. 9. It can be understood that interaction between a second terminal and a first terminal described on the second terminal is the same as that described on a first terminal side in the method shown in FIG. 2 to FIG. 8. To avoid repetition, relevant descriptions are appropriately omitted.

FIG. 9 is a schematic flowchart for implementing a computing power service method according to an embodiment of this application, and the method may be applied to a second terminal side As shown in FIG. 9, the method 900 includes the following steps.

S902: Send first indication information, where the first indication information is used to indicate that the second terminal expects the first terminal to perform computing processing on target data.

S904: Receive a processing result from the first terminal, where the processing result is obtained by performing computing processing on the target data by the first terminal.

In the embodiments of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

Optionally, in an embodiment, before the sending first indication information, the method further includes: receiving a first message from the first terminal, where the first message is used to indicate computing power information that the first terminal can provide.

Optionally, in an embodiment, before the sending first indication information, the method further includes: sending a second message, where the second message is used to indicate computing power information required by the second terminal.

Optionally, in an embodiment, before the sending first indication information, the method further includes: selecting and obtaining the first terminal based on at least one of the following 1) to 3): 1) computing power information required by the second terminal; 2) a priority sorting result of a plurality of terminals providing the computing power service, where the plurality of terminals providing the computing power service include the first terminal; and 3) a radio resource provided by the first terminal, where the radio resource is used to establish a communications connection between the first terminal and the second terminal.

Optionally, in an embodiment, the priority sorting result of the plurality of terminals providing the computing power service is obtained based on at least one of the following 1) to 3): 1) whether the plurality of terminals providing the computing power service have successfully provided the computing power service for the second terminal recently; 2) a capability sequence of computing power resources of the plurality of terminals providing the computing power service; and 3) a matching result between computing power resources that the plurality of terminals providing the computing power service can provide and computing power resources required by the second terminal.

Optionally, in an embodiment, before the sending first indication information, the method further includes: sending a computing power request message; and receiving a computing power response message from the first terminal.

Optionally, in an embodiment, before the sending first indication information, the method further includes: sending an access request message, where the access request message is sent by the second terminal based on a radio resource provided by the first terminal; and receiving an access response message from the first terminal.

Optionally, in an embodiment, the method further includes: sending a third message, where the third message is used to instruct the second terminal to select a computing power service provided by the first terminal.

Optionally, in an embodiment, the first terminal is selected by the network side device based on at least one of the following 1) to 6): 1) computing power information required by the second terminal; 2) a priority sorting result of a plurality of terminals providing the computing power service, where the plurality of terminals providing the computing power service include the first terminal; 3) a radio resource provided by the first terminal, where the radio resource is used to establish a communications connection between the first terminal and the second terminal; 4) location information of the first terminal and location information of the second terminal; 5) a terminal for providing the computing power service that the second terminal expects to use; and 6) a terminal for providing the computing power service that the second terminal does not expect to use.

Optionally, in an embodiment, before the sending first indication information, the method further includes: establishing a communications connection with the first terminal.

Optionally, in an embodiment, the method further includes: storing at least one of the following 1) to 3) of the first terminal: 1) identity information; 2) security information; and 3) computing power information.

Optionally, in an embodiment, the computing power information includes a computing power resource, and the computing power resource includes at least one of the following 1) to 12): 1) floating point operations per second; 2) a quantity of cores of a processor; 3) a multiply accumulate capability; 4) a quantity of cores of a graphics processing unit; 5) a dominant frequency of a processor/a graphics processing unit; 6) a frequency multiplication of a processor/a graphics processing unit; 7) an integer unit of a processor/a graphics processing unit; 8) a floating point unit of a processor/a graphics processing unit; 9) an output speed for computing a hash function; 10) a supported algorithm type; 11) a type of processed data; and 12) a security algorithm.

Optionally, in an embodiment, the first indication information, the first message, the second message, or the third message includes one of the following 1) to 2): 1) a non-access stratum message; and 2) an access stratum message.

Optionally, in an embodiment, the non-access stratum message includes at least one of the following 1) to 9): 1) a registration message; 2) a configuration update message; 3) a non-access stratum direct transfer message; 4) a message in a service request process; 5) a de-register message; 6) a session management message; 7) a session establishment message; 8) a session modification message; and 9) a session release message; and/or the access stratum message includes at least one of the following 1) to 6): 1) a broadcast message; 2) a system message; 3) a radio link establishment message; 4) a radio resource configuration message; 5) a radio resource reconfiguration message; and 6) a radio link release message.

FIG. 10 is a schematic flowchart for implementing a computing power service method according to an embodiment of this application, and the method may be applied to a network side device. As shown in FIG. 10, the method 1000 includes the following steps.

S 1002: Send second indication information, where the second indication information is used to indicate, for a second terminal, a first terminal that provides a computing power service, where the first terminal is used to: perform computing processing on target data to obtain a processing result, and send the processing result to the second terminal.

In the embodiments of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

Optionally, in an embodiment, before the sending second indication information, the method further includes: selecting the first terminal based on at least one of the following 1) to 6): 1) computing power information required by the second terminal; 2) a priority sorting result of a plurality of terminals providing the computing power service, where the plurality of terminals providing the computing power service include the first terminal; 3) a radio resource provided by the first terminal, where the radio resource is used to establish a communications connection between the first terminal and the second terminal; 4) location information of the first terminal and location information of the second terminal; 5) a terminal for providing the computing power service that the second terminal expects to use; and 6) a terminal for providing the computing power service that the second terminal does not expect to use.

FIG. 11 is a schematic diagram of a structure of a first terminal according to an embodiment of this application. As shown in FIG. 11, the first terminal 1100 includes the following modules:
a receiving module 1102, configured to receive first indication information from a second terminal, where the first indication information is used to indicate that the second terminal expects the first terminal to perform computing processing on target data;
a computing processing module 1104, configured to perform computing processing on the target data to obtain a processing result; and
a sending module 1106, configured to send the processing result to the second terminal.

In the embodiments of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

Optionally, in an embodiment, the sending module 1106 may be further configured to send a first message, where the first message is used to indicate computing power information that the first terminal can provide.

Optionally, in an embodiment, the receiving module 1102 may be further configured to receive a second message from the second terminal, where the second message is used to indicate computing power information required by the second terminal.

Optionally, in an embodiment, the first terminal is selected and obtained by the second terminal based on at least one of the following 1) to 3): 1) computing power information required by the second terminal; 2) a priority sorting result of a plurality of terminals providing the computing power service, where the plurality of terminals providing the computing power service include the first terminal; and 3) a radio resource provided by the first terminal, where the radio resource is used to establish a communications connection between the first terminal and the second terminal.

Optionally, in an embodiment, the priority sorting result of the plurality of terminals providing the computing power service is obtained based on at least one of the following 1) to 3): 1) whether the plurality of terminals providing the computing power service have successfully provided the computing power service for the second terminal recently; 2) a capability sequence of computing power resources of the plurality of terminals providing the computing power service; and 3) a matching result between computing power resources that the plurality of terminals providing the computing power service can provide and computing power resources required by the second terminal.

Optionally, in an embodiment, the receiving module 1102 may be further configured to receive a computing power request message from the second terminal; and the sending module 1106 may be further configured to send a computing power response message to the second terminal.

Optionally, in an embodiment, the receiving module 1102 may be further configured to receive an access request message from the second terminal, where the access request message is sent by the second terminal based on a radio resource provided by the first terminal; and the sending module 1106 may be further configured to send an access response message to the second terminal.

Optionally, in an embodiment, the receiving module 1102 may be further configured to receive a third message, where the third message is used to instruct the second terminal to select a computing power service provided by the first terminal, and before receiving the third message, if the first terminal sends a first message, the first terminal is further configured to stop sending the first message, and the first message is used to indicate computing power information that the first terminal can provide.

Optionally, in an embodiment, the first terminal is selected by the network side device based on at least one of the following 1) to 6): 1) computing power information required by the second terminal; 2) a priority sorting result of a plurality of terminals providing the computing power service, where the plurality of terminals providing the computing power service include the first terminal; 3) a radio resource provided by the first terminal, where the radio resource is used to establish a communications connection between the first terminal and the second terminal; 4) location information of the first terminal and location information of the second terminal; 5) a terminal for providing the computing power service that the second terminal expects to use; and 6) a terminal for providing the computing power service that the second terminal does not expect to use.

Optionally, in an embodiment, the first terminal is further configured to establish a communications connection with the second terminal.

Optionally, in an embodiment, the first terminal further includes a storage module, configured to store at least one of the following 1) to 3) of the second terminal: 1) identity information; 2) security information; and 3) computing power information.

Optionally, in an embodiment, the computing power information includes a computing power resource, and the computing power resource includes at least one of the following 1) to 12): 1) floating point operations per second; 2) a quantity of cores of a processor; 3) a multiply accumulate capability; 4) a quantity of cores of a graphics processing unit; 5) a dominant frequency of a processor/a graphics processing unit; 6) a frequency multiplication of a processor/a graphics processing unit; 7) an integer unit of a processor/a graphics processing unit; 8) a floating point unit of a processor/a graphics processing unit; 9) an output speed for computing a hash function; 10) a supported algorithm type; 11) a type of processed data; and 12) a security algorithm.

Optionally, in an embodiment, the first indication information, the first message, the second message, or the third message includes one of the following 1) to 2): 1) a non-access stratum message; and 2) an access stratum message.

Optionally, in an embodiment, the non-access stratum message includes at least one of the following 1) to 9): 1) a registration message; 2) a configuration update message; 3) a non-access stratum direct transfer message; 4) a message in a service request process; 5) a de-register message; 6) a session management message; 7) a session establishment message; 8) a session modification message; and 9) a session release message; and/or the access stratum message includes at least one of the following 1) to 6): 1) a broadcast message, 2) a system message, 3) a radio link establishment message, 4) a radio resource configuration message, 5) a radio resource reconfiguration message, and 6) a radio link release message.

For the first terminal 1100 according to this embodiment of this application, refer to the procedure corresponding to the method 200 according to this embodiment of this application. Furthermore, each unit/module of the first terminal 1100 and the foregoing other operations and/or functions are used to implement the corresponding procedure of the method 200, and a same or equivalent technical effect can be achieved. For brevity, details are not described herein again.

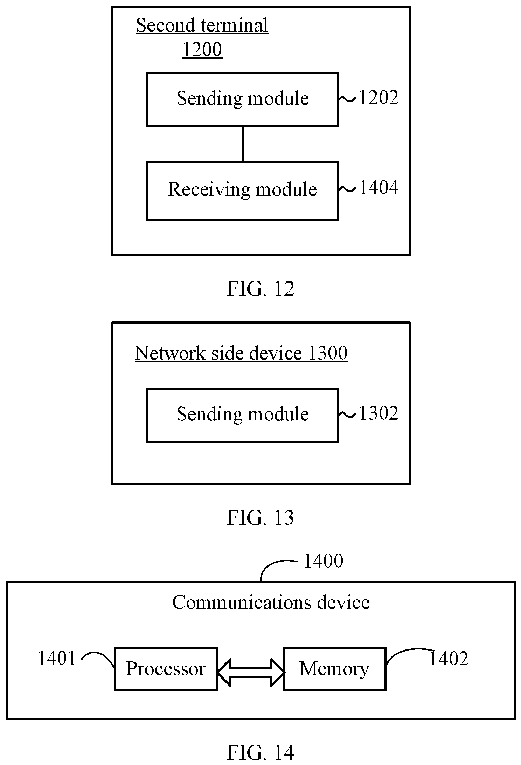

FIG. 12 is a schematic diagram of a structure of a second terminal according to an embodiment of this application. As shown in FIG. 12, the second terminal 1200 includes the following modules:
a sending module 1202, configured to send first indication information, where the first indication information is used to indicate that the second terminal expects the first terminal to perform computing processing on target data; and
a receiving module 1204, configured to receive a processing result from the first terminal, where the processing result is obtained by performing computing processing on the target data by the first terminal.

In the embodiments of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

Optionally, in an embodiment, the receiving module 1204 may be further configured to receive a first message from the first terminal, where the first message is used to indicate computing power information that the first terminal can provide.

Optionally, in an embodiment, the sending module 1202 may be further configured to send a second message, where the second message is used to indicate computing power information required by the second terminal.

Optionally, in an embodiment, the second terminal further includes a selection module, configured to select and obtain the first terminal based on at least one of the following 1) to 3): 1) computing power information required by the second terminal; 2) a priority sorting result of a plurality of terminals providing the computing power service, where the plurality of terminals providing the computing power service include the first terminal; and 3) a radio resource provided by the first terminal, where the radio resource is used to establish a communications connection between the first terminal and the second terminal.

Optionally, in an embodiment, the priority sorting result of the plurality of terminals providing the computing power service is obtained based on at least one of the following 1) to 3): 1) whether the plurality of terminals providing the computing power service have successfully provided the computing power service for the second terminal recently; 2) a capability sequence of computing power resources of the plurality of terminals providing the computing power service; and 3) a matching result between computing power resources that the plurality of terminals providing the computing power service can provide and computing power resources required by the second terminal.

Optionally, in an embodiment, the sending module 1202 may be further configured to send a computing power request message; and the receiving module 1204 may be further configured to receive a computing power response message from the first terminal.

Optionally, in an embodiment, the sending module 1202 may be further configured to send an access request message, where the access request message is sent by the second terminal based on a radio resource provided by the first terminal; and the receiving module 1204 may be further configured to receive an access response message from the first terminal.

Optionally, in an embodiment, the sending module 1202 may be further configured to send a third message, where the third message is used to instruct the second terminal to select a computing power service provided by the first terminal.

Optionally, in an embodiment, the first terminal is selected by the network side device based on at least one of the following 1) to 6): 1) computing power information required by the second terminal; 2) a priority sorting result of a plurality of terminals providing the computing power service, where the plurality of terminals providing the computing power service include the first terminal; 3) a radio resource provided by the first terminal, where the radio resource is used to establish a communications connection between the first terminal and the second terminal; 4) location information of the first terminal and location information of the second terminal; 5) a terminal for providing the computing power service that the second terminal expects to use; and 6) a terminal for providing the computing power service that the second terminal does not expect to use.

Optionally, in an embodiment, the second terminal is further configured to establish a communications connection with the first terminal.

Optionally, in an embodiment, the second terminal further includes a storage module, configured to store at least one of the following 1) to 3) of the first terminal: 1) identity information; 2) security information; and 3) computing power information.

Optionally, in an embodiment, the computing power information includes a computing power resource, and the computing power resource includes at least one of the following 1) to 12): 1) floating point operations per second; 2) a quantity of cores of a processor; 3) a multiply accumulate capability; 4) a quantity of cores of a graphics processing unit; 5) a dominant frequency of a processor/a graphics processing unit; 6) a frequency multiplication of a processor/a graphics processing unit; 7) an integer unit of a processor/a graphics processing unit; 8) a floating point unit of a processor/a graphics processing unit; 9) an output speed for computing a hash function; 10) a supported algorithm type; 11) a type of processed data; and 12) a security algorithm.

Optionally, in an embodiment, the first indication information, the first message, the second message, or the third message includes one of the following 1) to 2): 1) a non-access stratum message; and 2) an access stratum message.

Optionally, in an embodiment, the non-access stratum message includes at least one of the following 1) to 9): 1) a registration message; 2) a configuration update message; 3) a non-access stratum direct transfer message; 4) a message in a service request process; 5) a de-register message; 6) a session management message; 7) a session establishment message; 8) a session modification message; and 9) a session release message; and/or the access stratum message includes at least one of the following 1) to 6): 1) a broadcast message; 2) a system message; 3) a radio link establishment message; 4) a radio resource configuration message; 5) a radio resource reconfiguration message; and 6) a radio link release message.

For the second terminal 1200 according to this embodiment of this application, refer to the procedure corresponding to the method 900 according to this embodiment of this application. Furthermore, each unit/module of the second terminal 1200 and the foregoing other operations and/or functions are used to implement the corresponding procedure of the method 900, and a same or equivalent technical effect can be achieved. For brevity, details are not described herein again.

The first terminal or the second terminal in this embodiment of this application may be an apparatus, or may be a component, an integrated circuit, or a chip in a terminal. The apparatus may be a mobile terminal, or a non-mobile terminal. For example, the mobile terminal may include, but is not limited to, a type of the terminal 11 listed above. The non-mobile terminal may be a server, a network attached storage (Network Attached Storage, NAS), a personal computer (personal computer, PC), a television (television, TV), a teller machine or a self-service machine. This is not specifically limited in this embodiment of this application.

The first terminal or the second terminal in this embodiment of this application may be an apparatus with an operating system. The operating system may be an Android (Android) operating system, may be an iOS operating system, or may be another possible operating system, which is not specifically limited in the embodiments of this application.

The first terminal or the second terminal according to an embodiment of this application can implement the processes in the method embodiments in FIG. 2 to FIG. 9, and achieve the same technical effect. To avoid duplication, details are not described herein again.

FIG. 13 is a schematic diagram of a structure of a network side device according to an embodiment of this application. As shown in FIG. 13, the network side device 1300 includes: a sending module 1302, configured to send second indication information, where the second indication information is used to indicate, for a second terminal, a first terminal that provides a computing power service, where the first terminal is used to: perform computing processing on target data to obtain a processing result, and send the processing result to the second terminal.

In the embodiments of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

Optionally, in an embodiment, before the sending second indication information, the network side device 1300 is further configured to: select the first terminal based on at least one of the following: computing power information required by the second terminal; a priority sorting result of a plurality of terminals providing the computing power service, where the plurality of terminals providing the computing power service include the first terminal; a radio resource provided by the first terminal, where the radio resource is used to establish a communications connection between the first terminal and the second terminal; location information of the first terminal and location information of the second terminal; a terminal for providing the computing power service that the second terminal expects to use; and a terminal for providing the computing power service that the second terminal does not expect to use.

The network side device 1300 according to the embodiments of this application may correspond to the procedures of the method 1000 in the embodiments of this application, and the units/modules in the network side device 1300 and the foregoing operations and/or functions are respectively for implementing the corresponding procedures of the method 1000, and a same or equivalent technical effect can be achieved. For brevity, details are not described herein again.

Optionally, as shown in FIG. 14, an embodiment of this application further provides a communications device 1400, including a processor 1401, a memory 1402, and a program or an instruction stored in the memory 1402 and executable on the processor 1401. For example, when the communications device 1400 is the first terminal or the second terminal, and the program or the instruction is executed by the processor 1401, the processes of the computing power service method embodiment are performed, and a same technical effect can be achieved. When the communications device 1400 is a network side device, and the program or the instruction is executed by the processor 1401, the processes of the computing power service method embodiment are implemented, and a same technical effect can be achieved. To avoid repetition, details are not provided herein again.

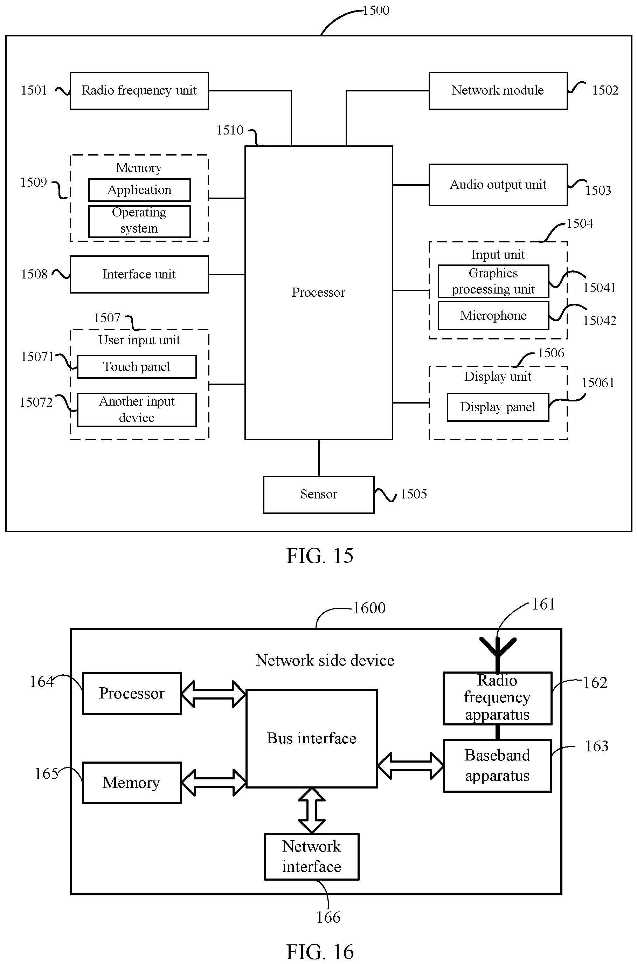

FIG. 15 is a schematic diagram of a hardware structure of a terminal according to an embodiment of this application.

The terminal 1500 includes but is not limited to components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

A person skilled in the art can understand that the terminal 1500 may further include a power supply (such as a battery) that supplies power to each component. The power supply may be logically connected to the processor 1510 by using a power supply management system, to implement functions such as charging and discharging management, and power consumption management by using the power supply management system. The terminal structure shown in FIG. 15 constitutes no limitation on the terminal, and the terminal may include more or fewer components than those shown in the figure, or combine some components, or have different component arrangements. Details are not described herein.

It should be understood that, in this embodiment of this application, the input unit 1504 may include a graphics processing unit (Graphics Processing Unit, GPU) 15041 and a microphone 15042, and the graphics processing unit 15041 processes image data of a still picture or a video obtained by an image capture apparatus (such as a camera) in a video capture mode or an image capture mode. The display unit 1506 may include a display panel 15061. Optionally, the display panel 15061 may be configured in a form such as a liquid crystal display or an organic light-emitting diode. The user input unit 1507 includes a touch panel 15071 and another input device 15072. The touch panel 15071 is also referred to as a touchscreen. The touch panel 15071 may include two parts: a touch detection apparatus and a touch controller. The another input device 15072 may include but is not limited to a physical keyboard, a functional button (such as a volume control button or a power on/off button), a trackball, a mouse, and a joystick. Details are not described herein.

In this embodiment of this application, the radio frequency unit 1501 receives downlink data from a network side device and then sends the downlink data to the processor 1510 for processing; and sends uplink data to the network side device. Usually, the radio frequency unit 1501 includes but is not limited to an antenna, at least one amplifier, a transceiver, a coupler, a low noise amplifier, a duplexer, and the like.

The memory 1509 may be configured to store a software program or an instruction and various data. The memory 1509 may mainly include a program or instruction storage area and a data storage area. The program or instruction storage area may store an operating system, and an application or an instruction required by at least one function (for example, a sound playing function or an image playing function). In addition, the memory 1509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1510 may include one or more processing units. Optionally, an application processor and a modem processor may be integrated into the processor 1510. The application processor mainly processes an operating system, a user interface, an application, an instruction, or the like. The modem processor mainly processes wireless communications, for example, a baseband processor. It can be understood that, alternatively, the modem processor may not be integrated into the processor 1510.

The radio frequency unit 1501 is configured to receive first indication information from a second terminal, where the first indication information is used to indicate that the second terminal expects the terminal 1500 to perform computing processing on target data; the processor 1510 is configured to perform computing processing on the target data to obtain a processing result; and the radio frequency unit 1501 is configured to send the processing result to the second terminal.

Alternatively, the radio frequency unit 1501 is configured to: send first indication information, where the first indication information is used to indicate that the terminal 1500 expects the first terminal to perform computing processing on target data; and receive a processing result from the first terminal, where the processing result is obtained by performing computing processing on the target data by the first terminal.

In the embodiments of this application, the computing power service is provided through direct connection between terminals, so as to avoid occupying more computing resources of the network side device; avoid occupying more communications resources of the network side device, thus avoiding the influence on other terminals in a same cell; avoid a failure of the computing power service when a network environment is not good; and the computing power resource of the first terminal is fully utilized to avoid resource waste.

The terminal 1500 provided in this embodiment of this application can implement the processes of the computing power service method embodiment, and a same technical effect can be achieved. To avoid repetition, details are not described herein again.

Specifically, an embodiment of this application further provides a network side device. As shown in FIG. 16, a network side device 1600 includes an antenna 161, a radio frequency apparatus 162, and a baseband apparatus 163. The antenna 161 is connected to the radio frequency apparatus 162. In an uplink direction, the radio frequency apparatus 162 receives information through the antenna 161, and sends the received information to the baseband apparatus 163 for processing. In a downlink direction, the baseband apparatus 163 processes information to be sent and sends the information to the radio frequency apparatus 162, and the radio frequency apparatus 162 processes the received information and sends the information through the antenna 161.

The foregoing band processing apparatus may be located in the baseband apparatus 163, and the method performed by the network side device in the foregoing embodiment may be implemented in the baseband apparatus 163. The baseband apparatus 163 includes a processor 164 and a memory 165.

The baseband apparatus 163 may include, for example, at least one baseband board, where a plurality of chips are disposed on the baseband board. As shown in FIG. 16, one chip is, for example, the processor 164, which is connected to the memory 165, so as to invoke a program in the memory 165 to perform operations of the network side device shown in the foregoing method embodiment.

The baseband apparatus 163 may further include a network interface 166, configured to exchange information with the radio frequency apparatus 162. For example, the interface is a common public radio interface (common public radio interface, CPRI for short).

Specifically, the network side device in this embodiment of the present invention further includes an instruction or a program stored in the memory 165 and executable on the processor 164. The processor 164 invokes the instruction or the program in the memory 165 to perform the method performed by the modules shown in FIG. 13, and a same technical effect is achieved. To avoid repetition, details are not provided herein again.

An embodiment of this application further provides a readable storage medium. The readable storage medium stores a program or an instruction, and when the program or the instruction is executed by a processor, the processes of the computing power service method embodiment are implemented and a same technical effect can be achieved. To avoid repetition, details are not described herein again.

The processor is the processor in the terminal described in the above embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the computing power service method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that a scope of the method and the apparatus in the implementations of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network side device, or the like) to perform the methods in the embodiments of this application.

The embodiments of this application are described with reference to the accompanying drawings. However, this application is not limited to the foregoing specific implementations. The foregoing specific implementations are merely examples, but are not limiting. Under the enlightenment of this application, a person of ordinary skill in the art may make many forms without departing from the objective and the scope of the claims of this application, and these forms all fall within the protection scope of this application.

## Claims

1. A computing power service method, applied to a first terminal and comprising:
receiving first indication information from a second terminal, wherein the first indication information is used to indicate that the second terminal expects the first terminal to perform computing processing on target data;
performing computing processing on the target data to obtain a processing result; and
sending the processing result to the second terminal.

2. The method according to claim 1, wherein before the receiving first indication information from a second terminal, the method further comprises:
sending a first message, wherein the first message is used to indicate computing power information that the first terminal can provide.

3. The method according to claim 1, wherein before the receiving first indication information from a second terminal, the method further comprises:
receiving a second message from the second terminal, wherein the second message is used to indicate computing power information required by the second terminal.

4. The method according to any one of claims 1 to 3, wherein the first terminal is selected and obtained by the second terminal based on at least one of following:
computing power information required by the second terminal;
a priority sorting result of a plurality of terminals providing the computing power service, wherein the plurality of terminals providing the computing power service include the first terminal; and
a radio resource provided by the first terminal, wherein the radio resource is used to establish a communications connection between the first terminal and the second terminal.

5. The method according to claim 4, wherein the priority sorting result of the plurality of terminals providing the computing power service is obtained based on at least one of following:
whether the plurality of terminals providing the computing power service have successfully provided the computing power service for the second terminal recently;
a capability sequence of computing power resources of the plurality of terminals providing the computing power service; and
a matching result between computing power resources that the plurality of terminals providing the computing power service can provide and computing power resources required by the second terminal.

6. The method according to any one of claims 1 to 3, wherein before the receiving first indication information from a second terminal, the method further comprises:
receiving a computing power request message from the second terminal; and
sending a computing power response message to the second terminal.

7. The method according to any one of claims 1 to 3, wherein before the receiving first indication information from a second terminal, the method further comprises:
receiving an access request message from the second terminal, wherein the access request message is sent by the second terminal based on a radio resource provided by the first terminal; and
sending an access response message to the second terminal.

8. The method according to claim 1, wherein the method further comprises:
receiving a third message, wherein the third message is used to instruct the second terminal to select a computing power service provided by the first terminal, wherein
before receiving the third message, if the first terminal sends a first message, the first terminal is further configured to stop sending the first message, and the first message is used to indicate computing power information that the first terminal can provide.

9. The method according to claim 1, wherein the first terminal is selected by a network side device based on at least one of following:
computing power information required by the second terminal;
a priority sorting result of a plurality of terminals providing the computing power service, wherein the plurality of terminals providing the computing power service include the first terminal;
a radio resource provided by the first terminal, wherein the radio resource is used to establish a communications connection between the first terminal and the second terminal;
location information of the first terminal and location information of the second terminal;
a terminal for providing the computing power service that the second terminal expects to use; and
a terminal for providing the computing power service that the second terminal does not expect to use.

10. The method according to claim 1, wherein before the receiving first indication information from a second terminal, the method further comprises:
establishing a communications connection with the second terminal.

11. The method according to claim 1, wherein the method further comprises: storing at least one of following of the second terminal: identity information, security information, and computing power information.

12. The method according to any one of claims 2 to 4, 8, 9, and 11, wherein the computing power information comprises a computing power resource, and the computing power resource comprises at least one of following: floating point operations per second; a quantity of cores of a processor; a multiply accumulate capability; a quantity of cores of a graphics processing unit; a dominant frequency of a processor/a graphics processing unit; a frequency multiplication of a processor/a graphics processing unit; an integer unit of a processor/a graphics processing unit; a floating point unit of a processor/a graphics processing unit; an output speed for computing a hash function; a supported algorithm type; a type of processed data; and a security algorithm.

13. The method according to any one of claims 1, 2, 3, and 8, wherein the first indication information, the first message, the second message, or the third message comprises one of following: a non-access stratum message and an access stratum message.

14. The method according to claim 13, wherein
the non-access stratum message comprises at least one of following: a registration message, a configuration update message, a non-access stratum direct transfer message, a message in a service request process, a de-register message, a session management message, a session establishment message, a session modification message, and a session release message; and/or
the access stratum message comprises at least one of following: a broadcast message, a system message, a radio link establishment message, a radio resource configuration message, a radio resource reconfiguration message, and a radio link release message.

15. A computing power service method, applied to a second terminal and comprising:
sending first indication information, wherein the first indication information is used to indicate that the second terminal expects the first terminal to perform computing processing on target data; and
receiving a processing result from the first terminal, wherein the processing result is obtained by performing computing processing on the target data by the first terminal.

16. The method according to claim 15, wherein before the sending first indication information, the method further comprises:
receiving a first message from the first terminal, wherein the first message is used to indicate computing power information that the first terminal can provide.

17. The method according to claim 15, wherein before the sending first indication information, the method further comprises:
sending a second message, wherein the second message is used to indicate computing power information required by the second terminal.

18. The method according to any one of claims 15 to 17, wherein before the sending first indication information, the method further comprises: selecting and obtaining the first terminal based on at least one of following:
computing power information required by the second terminal;
a priority sorting result of a plurality of terminals providing the computing power service, wherein the plurality of terminals providing the computing power service include the first terminal; and
a radio resource provided by the first terminal, wherein the radio resource is used to establish a communications connection between the first terminal and the second terminal.

19. The method according to claim 18, wherein the priority sorting result of the plurality of terminals providing the computing power service is obtained based on at least one of following:
whether the plurality of terminals providing the computing power service have successfully provided the computing power service for the second terminal recently;
a capability sequence of computing power resources of the plurality of terminals providing the computing power service; and
a matching result between computing power resources that the plurality of terminals providing the computing power service can provide and computing power resources required by the second terminal.

20. The method according to any one of claims 15 to 17, wherein before the sending first indication information, the method further comprises:
sending a computing power request message; and
receiving a computing power response message from the first terminal.

21. The method according to any one of claims 15 to 17, wherein before the sending first indication information, the method further comprises:
sending an access request message, wherein the access request message is sent by the second terminal based on a radio resource provided by the first terminal; and
receiving an access response message from the first terminal.

22. The method according to claim 15, wherein the method further comprises:
sending a third message, wherein the third message is used to instruct the second terminal to select a computing power service provided by the first terminal.

23. The method according to claim 15, wherein the first terminal is selected by a network side device based on at least one of following:
computing power information required by the second terminal;
a priority sorting result of a plurality of terminals providing the computing power service, wherein the plurality of terminals providing the computing power service include the first terminal;
a radio resource provided by the first terminal, wherein the radio resource is used to establish a communications connection between the first terminal and the second terminal;
location information of the first terminal and location information of the second terminal;
a terminal for providing the computing power service that the second terminal expects to use; and
a terminal for providing the computing power service that the second terminal does not expect to use.

24. The method according to claim 15, wherein before the sending first indication information, the method further comprises:
establishing a communications connection with the first terminal.

25. The method according to claim 15, wherein the method further comprises: storing at least one of following of the first terminal: identity information, security information, and computing power information.

26. The method according to any one of claims 16 to 18, 22, 23, and 25, wherein the computing power information comprises a computing power resource, and the computing power resource comprises at least one of following: floating point operations per second; a quantity of cores of a processor; a multiply accumulate capability; a quantity of cores of a graphics processing unit; a dominant frequency of a processor/a graphics processing unit; a frequency multiplication of a processor/a graphics processing unit; an integer unit of a processor/a graphics processing unit; a floating point unit of a processor/a graphics processing unit; an output speed for computing a hash function; a supported algorithm type; a type of processed data; and a security algorithm.

27. The method according to any one of claims 15, 16, 17, and 22, wherein the first indication information, the first message, the second message, or the third message comprises one of the following: a non-access stratum message and an access stratum message.

28. The method according to claim 27, wherein
the non-access stratum message comprises at least one of following: a registration message, a configuration update message, a non-access stratum direct transfer message, a message in a service request process, a de-register message, a session management message, a session establishment message, a session modification message, and a session release message; and/or
the access stratum message comprises at least one of following: a broadcast message, a system message, a radio link establishment message, a radio resource configuration message, a radio resource reconfiguration message, and a radio link release message.

29. A computing power service method, applied to a network side device and comprising:
sending second indication information, wherein the second indication information is used to indicate, for a second terminal, a first terminal that provides a computing power service, wherein the first terminal is used to: perform computing processing on target data to obtain a processing result, and send the processing result to the second terminal.

30. The method according to claim 29, wherein before the sending second indication information, the method further comprises: selecting the first terminal based on at least one of following:
computing power information required by the second terminal;
a priority sorting result of a plurality of terminals providing the computing power service, wherein the plurality of terminals providing the computing power service include the first terminal;
a radio resource provided by the first terminal, wherein the radio resource is used to establish a communications connection between the first terminal and the second terminal;
location information of the first terminal and location information of the second terminal;
a terminal for providing the computing power service that the second terminal expects to use; and
a terminal for providing the computing power service that the second terminal does not expect to use.

31. A first terminal, comprising:
a receiving module, configured to receive first indication information from a second terminal, wherein the first indication information is used to indicate that the second terminal expects the first terminal to perform computing processing on target data;
a computing processing module, configured to perform computing processing on the target data to obtain a processing result; and
a sending module, configured to send the processing result to the second terminal.

32. A second terminal, comprising:
a sending module, configured to send first indication information, wherein the first indication information is used to indicate that the second terminal expects the first terminal to perform computing processing on target data; and
a receiving module, configured to receive a processing result from the first terminal, wherein the processing result is obtained by performing computing processing on the target data by the first terminal.

33. A network side device, comprising:
a sending module, configured to send second indication information, wherein the second indication information is used to indicate, for a second terminal, a first terminal that provides a computing power service, wherein the first terminal is used to: perform computing processing on target data to obtain a processing result, and send the processing result to the second terminal.

34. A terminal, comprising a processor, a memory, and a program or an instruction stored in the memory and executable on the processor, wherein when the program or the instruction is executed by the processor, the computing power service method according to any one of claims 1 to 28 is implemented.

35. A network side device, comprising a processor, a memory, and a program or an instruction stored in the memory and executable on the processor, wherein when the program or the instruction is executed by the processor, the computing power service method according to any one of claims 29 to 30 is implemented.

36. A readable storage medium, wherein the readable storage medium stores a program or an instruction, and when the program or the instruction is executed by a processor, the computing power service method according to any one of claims 1 to 30 is implemented.
